(19)

**Europäisches Patentamt**
**European Patent Office**
**Office européen des brevets**

(11)  **EP 2 771 399 B2**

(12)  # NEW EUROPEAN PATENT SPECIFICATION
After opposition procedure

(45)  Date of publication and mention
of the opposition decision:
**09.03.2022   Bulletin 2022/10**

(45)  Mention of the grant of the patent:
**27.04.2016   Bulletin 2016/17**

(21)  Application number: **12777916.3**

(22)  Date of filing: **24.10.2012**

(51)  International Patent Classification (IPC):
**C08L 23/06** (2006.01)     **F16L 9/12** (2006.01)
**C08L 23/08** (2006.01)

(52)  Cooperative Patent Classification (CPC):
(C-Sets available)
**C08L 23/0815; C08L 23/06;** C08L 2205/02;
C08L 2205/025     (Cont.)

(86)  International application number:
**PCT/EP2012/071074**

(87)  International publication number:
**WO 2013/060736 (02.05.2013 Gazette 2013/18)**

(54)  **PROCESS FOR THE PREPARATION OF A HIGH DENSITY POLYETHYLENE BLEND**

VERFAHREN ZUR HERSTELLUNG VON POLYETHYLEN  HOHER DICHTE

PROCÉDÉ POUR LA PRÉPARATION DE  POLYÉTHYLÈNE DE HAUTE DENSITÉ

(84)  Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30)  Priority:  **26.10.2011   EP 11186750**

(43)  Date of publication of application:
**03.09.2014   Bulletin 2014/36**

(73)  Proprietor: **Borealis AG**
**1020 Vienna (AT)**

(72)  Inventors:
• **ZOPF, Ernst**
**A-4222 St. Georgen (AT)**
• **ARELLANO, Pablo Ivan Aguayo**
**A-4060 Leonding-Doppl (AT)**
• **TYAGI, Sandeep**
**A-4020 Linz (AT)**
• **TYNYS, Antti**
**A-4020 Linz (AT)**
• **BRAUN, Juliane**
**A-4040 Linz (AT)**
• **LIU, Yi**
**A-4209 Engerwitzdorf (AT)**
• **GAHLEITNER, Markus**
**A-4501 Neuhofen/Krems (AT)**
• **KHEIRANDISH, Saeid**
**41468 Neuss (DE)**
• **HRISTOV, Velichko**
**A-4040 Linz (AT)**

• **KAMINSKI, Henrich**
**A-4400 Steyr (AT)**

(74)  Representative: **Dehns**
**St. Bride's House**
**10 Salisbury Square**
**London EC4Y 8JD (GB)**

(56)  References cited:
**EP-A1- 1 772 485          EP-A1- 1 772 486
EP-A1- 2 011 822          EP-A1- 2 354 184
WO-A2-2007/022908**

• **SONG S ET AL: "Effect of small amount of ultra
high molecular weight component on the
crystallization behaviors of bimodal high density
polyethylene", POLYMER, ELSEVIER SCIENCE
PUBLISHERS B.V, GB, vol. 49, no. 12, 10 June
2008 (2008-06-10) , pages 2964-2973,
XP022703137, ISSN: 0032-3861, DOI:
10.1016/J.POLYMER.2008.04.050 [retrieved on
2008-05-02]**

(52) Cooperative Patent Classification (CPC): (Cont.)

C-Sets
**C08L 23/06, C08L 23/0815, C08L 2205/02;**
**C08L 23/0815, C08L 23/06, C08L 2205/02,**
**C08L 2205/025;**
C08F 110/02, C08F 2500/01, C08F 2500/12,
C08F 2500/17;
C08F 210/16, C08F 210/08, C08F 2500/07

**Description**

This invention concerns a pipe made from a multimodal polyethylene composition. In particular, the invention relates to a pipe made from a polyethylene composition comprising a high density multimodal polyethylene component and an ultrahigh molecular weight polyethylene homopolymer component.

Multimodal polyethylene polymers are well known in the art. A multimodal polyethylene system typically comprises a high molecular weight (HMW) and a low molecular weight (LMW) component. The HMW component confers good mechanical properties to the system, whilst the LMW component provides good processability. Multimodal polyethylene systems have a wide range of useful practical applications, such as in the production of blow moulded articles films or pipes. Improved mechanical properties can be achieved by increasing the molecular weight of the HMW component. This, however, is usually at the cost of a loss in homogeneity resulting from an increase in the viscosity ratio between the HMW and LMW components, which can in turn actually be detrimental to the mechanical properties attained.

Further improved mechanical properties are possible by including an ultra high molecular weight (UHMW) fraction into a multimodal polyethylene system. There are serious compatibility problems however when such a high Mw species is added. For example, Ogunniyi et al (Journal of Applied Polymer Science, 2005, 97, 413-425) and Vadhar et al (Journal of Applied Polymer Science, 1986, 32, 5575-5584) both report the need for long blending times of the order of 15 minutes in a batch mixer when UHMW polyethylene was added to other polyethylenes.

The incorporation of UHMW polyethylene into a polyethylene composition as a copolymer is also known and is reported in, for example, WO 2007/042216, WO 96/18677 and WO 2006/092378.

The inclusion of UHMW polyethylene into HDPE *via* extrusion has also been investigated and has been carried out using a co-rotating twin screw extruder by Huang and Brown (Polymer, 1992, 33, 2989-2997). However, although the UHMW polyethylene particles were found to be well bonded in the matrix and this helped to slow down the rate of crack propagation, when analysed under SEM, the UHMW polyethylene was found to remain in large separate domains with no evidence of "melting" into the HDPE matrix. For these reasons, the amount of UHMW polyethylene is limited to low loadings.

In WO94/28064, polyethylene compositions are reported comprising a UHMW component and a unimodal HDPE component.

In order to maximise the advantage gained by including an UHMW polyethylene in a bimodal polyethylene blend, there remains a need for the generation of polymers with increased weight contents of this useful component.

It is an object of the present invention to provide a pipe made from a multimodal polyethylene blend which has desirable mechanical properties and processability. Specifically, it is desired to produce a pipe made from a blend of an UHMW polyethylene into a multimodal polyethylene matrix at increased loadings than was previously possible, allowing advantage to be taken of the resulting enhanced mechanical properties. Improvements in sagging behaviour and impact strength, without an associated loss in tensile properties are desired.

The present inventors have found that a pipe made from the combination of a particular high density multimodal polyethylene polymer with a particular homopolymer ultra high molecular weight component which provides the necessary properties. These components can surprisingly be blended together to give homogeneous blends which possess excellent impact strength and strain at break without losses of tensile modulus. The blends also exhibit excellent sag resistance making them ideal for pipe formation.

**Summary of Invention**

Thus viewed from a first aspect the invention provides a pipe made from a high density polyethylene blend, comprising

> 1. (A) 55 to 95 wt% of a high density multimodal polyethylene component having a density of at least 940 $kg/m^3$ measured according to ISO1183, said high density multimodal polyethylene copolymer comprising an ethylene homopolymer component and a hexene ethylene copolymer component; and
> 2. (B) 5 to 45 wt% of an ultra-high molecular weight polyethylene homopolymer having an intrinsic viscosity of at least 6 dl/g measured according to DIN EN ISO 1628 (1998) in Decalin at 135°C and an $MFR_{21}$ of less than 0.5 g/10min (UHMW polyethylene) measured by ISO 1133 under 21.6 kg load at 190'C; and wherein said blend has an $MFR_{21}$ of 10.0 g/10min or less and a density of at least 940 $kg/m^3$.

Pipes for various purposes, such as fluid transport, e.g. transport of liquids or gases such as water or natural gas are possible. It is common for the fluid to be pressurised in these pipes.

## Detailed Description of Invention

The tests for any claimed parameter are given in the "analytical tests" section of the text which precedes the examples.

Wherever the term "molecular weight Mw" is used herein, the weight average molecular weight is meant. Whereever the term "molecular weight Mv" is used herein, the nominal viscosity molecular weight is meant.

The polyethylene blend in the pipe of the invention comprises at least two components: a high density multimodal polyethylene component, and an ultra-high molecular weight polyethylene homopolymer component. In all embodiments, the blend is an HDPE, i.e. one having a density of at least 940 kg/m$^3$.

## Blend Properties

The properties of the blend are reported below. The parameters which follow may be measured in the presence of standard additives that are inherently present in commercial polymers which may be used to manufacture the blends.

The polyethylene blend preferably has a density according to ISO 1183 at 23°C of at least 940 kg/m$^3$, preferably at least 945 kg/m , more preferably at least 950 kg/m$^3$, especially at least 952 kg/m$^3$. The upper limit for density may by 980 kg/m$^3$, preferably 975 kg/m$^3$, especially 970 kg/m$^3$. A highly preferred density range is 950 to 965 kg/m$^3$, especially 952 to 961 kg/m$^3$.

The MFR$_{21}$ according to ISO 1133 of the polyethylene blend is preferably in the range of 0.05 to 10 g/10 min, preferably 0.1 to 8 g/10min, especially 0.2 to 5 g/10min.

The polyethylene blend preferably has an MFR$_5$ of less than 1.0 g/10min, preferably less than 0.5 g/10min.

The polydispersity index (PI) of the polyethylene blends is preferably in the range 0.5 to 4 Pa$^{-1}$, more preferably 0.8 to 3.4 Pa$^{-1}$. Highly preferably the PI is in the range 1 to 3.1 Pa$^{-1}$.

The notched impact strength of the polyethylene blends is preferably greater than 30 kJ/m$^2$, more preferably greater than 50 kJ/m$^2$, even more preferably greater than 100 kJ/m$^2$, when measured at 0 °C.

The notched impact strength of the polyethylene blends is preferably greater than 15 kJ/m$^2$ when measured at -30 °C, more preferably greater than 30 kJ/m$^2$.

The tensile modulus of the blends is preferably higher than 85% of the value of component (A) on its own, especially higher than 90%. The tensile modulus of the blends may therefore be at least 950 MPa, such as at least 1000 MPa, preferably at least 1050 MPa, especially at least 1100 MPa.

The strain at break of the blends is preferably greater than the strain at break of component (A) on its own, e.g. at least 10% more.

The blends resist sagging. This can be shown with reference to Eta 747. Values of at least 1,000 kPas are preferred, preferably more than 3,000 kPa are possible.

The blends also show very low white spot values indicating low levels of gels and hence good homogeneity. White spots can be determined using microscopy. It is preferred if the blends have minimal white spots.

## High Density Multimodal Polyethylene Component

The blend includes a high density multimodal polyethylene component, i.e. one having a density of at least 940 kg/m$^3$. The term "multimodal" means herein, unless otherwise stated, multimodality with respect to molecular weight distribution and includes therefore a bimodal polymer. Usually, a polyethylene composition, comprising at least two polyethylene fractions, which have been produced under different polymerization conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer will show two or more maxima or is typically distinctly broadened in comparison with the curves for the individual fractions. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product.

Component (A) of the blend is a high density multimodal polyethylene and is preferably present in an amount of 55 to 95 wt%, such as 58 to 90 wt%, preferably 60 to 87 wt%, more preferably 60 to 80 wt % of the blend.

The multimodal polyethylene component (A) preferably has a density according to ISO 1183 at 23°C of at least 940 kg/m$^3$, preferably at least 945 kg/m$^3$. The upper limit for density may by 980 kg/m$^3$, preferably 975 kg/m$^3$, especially 970 kg/m$^3$. A highly preferred density range is 945 to 965 kg/m$^3$.

The $MFR_{21}$ according to ISO 1133 of the multimodal polyethylene is preferably in the range of 1 to 20 g/10min, preferably 2 to 15 g/10 min. Preferably the multimodal polyethylene component (A) has an $MFR_{21}$ of 3 to 12 g/10min.

The $MFR_5$ according to ISO 1133 of the multimodal polyethylene component (A) is preferably less than 1.0 g/10min.

Component (A) preferably has a $M_w$ of at least 70,000 g/mol, more preferably at least 120,000 g/mol. The Mw of the Component (A) should be less than 400,000 g/mol, preferably less than 300,000 g/mol.

The Mw/Mn of component (A) may be at least 4, such as at least 10, such as 10 to 30.

In all embodiments of the invention, it is preferable if component (A) is a multimodal polyethylene comprising at least (i) a lower weight average molecular weight (LMW) ethylene homopolymer or copolymer component, and (ii) a higher weight average molecular weight (HMW) ethylene homopolymer or copolymer component. At least one of said LMW and HMW components is a copolymer of ethylene with hexene. It is preferred that at least said HMW component is an ethylene copolymer. Said LMW is preferably the homopolymer.

Said LMW component of multimodal polymer preferably has a $MFR_2$ of at least 5 g/10 min, preferably at least 50 g/10 min, more preferably at least 100 g/10min.

The density of LMW component of said multimodal polymer may range from 950 to 980 kg/m³, e.g. 950 to 970 kg/m³.

The LMW component of said multimodal polymer may form from 30 to 70 wt%, e.g. 40 to 60% by weight of the multimodal polymer with the HMW component forming 70 to 30 wt%, e.g. 60 to 40% by weight. In one embodiment said LMW component forms 50 wt% or more of the multimodal polymer as defined above or below. Typically, the LMW component forms 45 to 55% and the HMW component forms 55 to 45% of the blend.

The HMW component of said multimodal ethylene polymer has a lower $MFR_2$ than the LMW component.

The multimodal ethylene polymer can comprise one monomer or two monomers or more than 2 monomers. The use of a single comonomer is preferred. If two comonomers are used one is hexene and the other is a diene selected from 1,7-octadiene and 7-methyl- 1,6-octadiene .

The amount of comonomer is preferably such that it comprises 0-3 mol%, more preferably 0.1-2.0 mol% and most preferably 0.1-1.5 mol% of the ethylene polymer. Values under 1.0 mol% are also envisaged, e.g. 0.1 to 1.0 mol%. These can be determined by NMR.

It is preferred however if the ethylene polymer comprises a LMW homopolymer component and a HMW ethylene hexene copolymer.

For the preparation of the multimodal ethylene polymer polymerisation methods well known to the skilled person may be used. It is within the scope of the invention for a multimodal, e.g. at least bimodal, polymers to be produced by blending each of the components *in-situ* during the polymerisation process thereof (so called in-situ process) or, alternatively, by blending mechanically two or more separately produced components in a manner known in the art.

Polyethylenes are preferably obtained by in-situ blending in a multistage polymerisation process. Accordingly, polymers are obtained by in-situ blending in a multistage, i.e. two or more stage, polymerization process including solution, slurry and gas phase process, in any order. Whilst it is possible to use different single site catalysts in each stage of the process, it is preferred if the catalyst employed is the same in both stages.

Ideally therefore, the polyethylene polymer used in the blend are produced in at least two-stage polymerization using a single site catalyst or Ziegler Natta catalyst. Thus, for example two slurry reactors or two gas phase reactors, or any combinations thereof, in any order can be employed. Preferably however, the polyethylene is made using a slurry polymerization in a loop reactor followed by a gas phase polymerization in a gas phase reactor.

A loop reactor - gas phase reactor system is well known as Borealis technology, i.e. as a BORSTAR™ reactor system. Such a multistage process is disclosed e.g. in EP517868.

The conditions used in such a process are well known. For slurry reactors, the reaction temperature will generally be in the range 60 to 110°C, e.g. 85-110°C, the reactor pressure will generally be in the range 5 to 80 bar, e.g. 50-65 bar, and the residence time will generally be in the range 0.3 to 5 hours, e.g. 0.5 to 2 hours. The diluent used will generally be an aliphatic hydrocarbon having a boiling point in the range -70 to +100°C, e.g. propane. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C, e.g. 70 to 110°C, the reactor pressure will generally be in the range 10 to 25 bar, and the residence time will generally be 1 to 8 hours. The gas used will commonly be a non-reactive gas such as nitrogen or low boiling point hydrocarbons such as propane together with monomer, e.g. ethylene.

The ethylene concentration in the first, preferably loop, reactor may be around 5 to 15 mol%, e.g. 7.5 to 12 mol%.

In the second, preferably gas phase, reactor, ethylene concentration is preferably much higher, e.g. at least 40 mol% such as 45 to 65 mol%, preferably 50 to 60 mol%.

Preferably, the first polymer fraction is produced in a continuously operating loop reactor where ethylene is polymerised in the presence of a polymerization catalyst as stated above and a chain transfer agent such as hydrogen.

The diluent is typically an inert aliphatic hydrocarbon, preferably isobutane or propane. The reaction product is then transferred, preferably to continuously operating gas phase reactor. The second component can then be formed in a gas phase reactor using preferably the same catalyst.

The multimodal polyethylenes are commercial products and can be purchased from various suppliers.

**UHMW Component**

The blend further comprises component (B) an UHMW polyethylene homopolymer component in an amount of 5 to 45 wt%. Preferably, this UHMWPE comprises 10 to 42 wt%, such as 13 to 40 wt% of the blend, even more preferably 20 to 40 wt%. It will be appreciated that the UHMW component is different to the (A) component of the blend.

The UHMW polyethylene component of the blends preferably has a nominal viscosity molecular weight (Mv) of at least 800,000 g/mol, preferably at least 850,000 g/mol, especially at least 950,000 g/mol. In all embodiments, it is preferred if the UHMW polyethylene has a Mv of less than 2,000 ,000 g/mol, even more preferably less than 1,500,000 g/mol. In some embodiments, it is preferred if the Mv of the UHMW polyethylene is in the range of 800,000 to 1,000,000. It has been found that when using a polyethylene having such an Mv that the impact strength of the blend can be very high. Moreover, this high impact strength can be achieved without any reduction in tensile modulus. It is often the case that improvements in impact strength lead to a reduction in stiffness due to a reduction in crystallinity. This is not observed in the present invention, in particular where the UHMW polyethylene has an Mv in the range of 800,000 to 1,000,000.

The UHMW polyethylene is an ethylene homopolymer. The UHMW component is also preferably unimodal. This means that in has a single peak on GPC. Ideally it is formed from a single component and is therefore produced in a single manufacturing step.

The UHMW polyethylene can be prepared by conventional processes. Preferably, the UHMW polyethylene is prepared using a Ziegler-Natta catalyst. These UHMW polymers are commercially available polymers.

The density of the UHMW component can be in the range 920 to 960 kg/m$^3$, preferably 930 to 950 kg/m$^3$.

This component has a very low MFR, such as an MFR$_{21}$ of less than 0.5 g/10min, especially MFR$_{21}$ of less than 0.1 g/10min, more especially less than 0.05 g/10min.

The intrinsic viscosity of the UHMW component is at least 6 dUg, preferably at least 7 dl/g such as at least 8 dl/g. The intrinsic viscosity of the UHMW component should preferably not exceed 20 dl/g. It will be appreciated that intrinsic viscosity is a measure of molecular weight in this field.

**Preparation of Blend**

The blends may be prepared simply by mixing the components but to ensure homogeneity and hence no white spots, it will be appreciated that the components have to be compounded. This can be achieved by any conventional method known to those skilled in the art, e.g. extrusion or kneading.

Where extrusion is used to prepare the blends, a second extrusion step may optionally be employed, e.g. under the same conditions as the first. It has been found that the use of two extrusion steps can improve homogeneity. The strain at break and possibly also sagging properties can thus be improved. In the context of UHMW polyethylene which has an Mv in the range of 800,000 to 1,000,000, it is believed that a single extrusion step is sufficient to achieve the improved impact and stiffness (tensile modulus) properties discussed above.

The use of extrusion to homogenise the compositions is preferred, in particular the use of a co-rotating twin extruder, such as ZSK 18 or ZSK 40.

The use of kneading (e.g. the use of a Haake kneader) causes a very large uplift in sagging properties (measured as Eta 747). Sagging properties can be measured via the Eta 747. Values of Eta 747 of at least 3,000 kPa are preferably achievable in the present case.

It will be appreciated that prior to forming the blend, the two polymer components may be blended with standard additives and adjuvants known in the art. It may also contain additional polymers, such as carrier polymers of the additive masterbatches. The properties of the components of the blend and the blend itself can be measured in the absence of or in the presence of any additives. It will be preferred if any additives are present however when properties are determined.

Suitable antioxidants and stabilizers are, for instance, sterically hindered phenols, phosphates or phosphonites, sulphur containing antioxidants, alkyl radical scavengers, aromatic amines, hindered amine stabilizers and the blends containing compounds from two or more of the above-mentioned groups.

Examples of sterically hindered phenols are, among others, 2,6-di-tert-butyl - 4-methyl phenol (sold, e.g., by Degussa under a trade name of Ionol CP), pentaerythrityl-tetrakis(3-(3',5'-di-tert. butyl-4-hydroxyphenyl)-propionate (sold, e.g., by Ciba Specialty Chemicals under the trade name of Irganox 1010) octadecyl-3-3(3'5'-di-tert-butyl-4'-hydroxyphenyl)propionate (sold, e.g., by Ciba Specialty Chemicals under the trade name of Irganox 1076) and 2,5,7,8-tetramethyl-2(4',8',12'-trimethyltridecyl)chroman-6-ol (sold, e.g., by BASF under the trade name of Alpha-Tocopherol).

Examples of phosphates and phosphonites are tris (2,4-di-*t*-butylphenyl) phosphite (sold, e.g., by Ciba Specialty Chemicals under the trade name of Irgafos 168), tetrakis-(2,4-di-*t*-bytylphenyl)-4,4'-biphenylen-di-phosphonite (sold, e.g., by Ciba Specialty Chemicals under the trade name of Irgafos P-EPQ) and tris-(nonylphenyl)phosphate (sold, e.g., by Dover Chemical under the trade name of Doverphos HiPure 4).

Examples of sulphur-containing antioxidants are dilaurylthiodipropionate (sold, e.g., by Ciba Specialty Chemicals under the trade name of Irganox PS 800), and distearylthiodipropionate (sold, e.g., by Chemtura under the trade name of Lowinox DSTDB).

Examples of nitrogen-containing antioxidants are 4,4'-bis(1,1'-dimethylbenzyl)diphenylamine (sold, e.g., by Chemtura under the trade name of Naugard 445), polymer of 2,2,4-trimethyl-1,2-dihydroquinoline (sold, e.g., by Chemtura under the trade name of Naugard EL-17), *p*-(*p*-toluene-sulfonylamido)-diphenylamine (sold, e.g., by Chemtura under the trade name of Naugard SA) and *N,N'*-diphenyl-*p*-phenylene-diamine (sold, e.g., by Chemtura under the trade name of Naugard J).

Commercially available blends of antioxidants and process stabilizers are also available, such as Irganox B225, Irganox B215 and Irganox B561 marketed by Ciba-Specialty Chemicals.

Suitable acid scavengers are, for instance, metal stearates, such as calcium stearate and zinc stearate. They are used in amounts generally known in the art, typically from 500 ppm to 10000 ppm and preferably from 500 to 5000 ppm.

Carbon black is a generally used pigment, which also acts as an UV-screener. Typically carbon black is used in an amount of from 0.5 to 5 % by weight, preferably from 1.5 to 3.0 % by weight. Preferably the carbon black is added as a masterbatch where it is premixed with a polymer, preferably high density polyethylene (HDPE), in a specific amount. Suitable masterbatches are, among others, HD4394, sold by Cabot Corporation, and PPM1805 by Poly Plast Muller. Also titanium oxide may be used as an UV-screener.

Components (A) and (B) in the polymer blend can be further blended with any other polymer of interest or used on its own as the only olefinic material in an article. Thus, the ethylene polymer can be blended with known HDPE, MDPE, LDPE, LLDPE polymers. Ideally however any pipemade from the ethylene polymer blend is the invention consists essentially of the polymer blend, i.e. contains the multimodal polyethylene component and the UHMWPE component.

### Applications

Pipes can be manufactured using various techniques such as RAM extrusion or screw extrusion.

It will be appreciated that the preferred features of the polymers as described herein can all be combined with each other in any way.

The invention will now be described with reference to the following non limiting examples and figure. Figure 1 is a microscopic section of the pellets of blend 3 showing some white spots and figure 2 is a microscopic section of the pellets of blend 4 showing minimal white spots. Figure 3 is a plot of impact strength vs stifness for the polymer blends of table 3.

### Analytical tests

### Melt Flow Rate

The melt flow rate (MFR) is determined according to ISO 1133 and is indicated in g/10 min. The MFR is an indication of the melt viscosity of the polymer. The MFR is determined at 190°C for polyethylene. The load under which the melt flow rate is determined is usually indicated as a subscript, for instance $MFR_2$ is measured under 2.16 kg load, $MFR_5$ is measured under 5 kg load or $MFR_{21}$ is measured under 21.6 kg load.

### Density

Density of the polymer was measured according to ISO 1183 / 1872-2B.

### Molecular weight

$M_w$, $M_n$ and MWD are measured by Gel Permeation Chromatography (GPC) according to the following method:

The weight average molecular weight $M_w$ and the molecular weight distribution (MWD = $M_w/M_n$ wherein $M_n$ is the number average molecular weight and $M_w$ is the weight average molecular weight) is measured according to ISO 16014-4:2003 and ASTM D 6474-99. A Waters GPCV2000 instrument, equipped with refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert-butyl-4-methyl-phenol) as solvent at 140 °C and at a constant flow rate of 1 mL/min. 209.5 μL of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants were used as given in ASTM D 6474-99. All samples were prepared by dissolving 0.5 - 4.0 mg of polymer in 4 mL (at 140 °C) of stabilized TCB (same as mobile phase) and keeping for max. 3 hours at a maximum temperature of 160 °C with continuous gentle shaking prior sampling in into the GPC instrument.

As it is known in the art, the weight average molecular weight of a blend can be calculated if the molecular weights of its components are known according to:

$$Mw_b = \sum_i w_i \cdot Mw_i$$

where

Mw$_b$ is the weight average molecular weight of the blend,
w$_i$ is the weight fraction of component "i" in the blend and
Mw$_i$ is the weight average molecular weight of the component "i".

The number average molecular weight can be calculated using the well-known mixing rule:

$$\frac{1}{Mn_b} = \sum_i \frac{w_i}{Mn_i}$$

where

Mn$_b$ is the weight average molecular weight of the blend,
w$_i$ is the weight fraction of component "i" in the blend and
Mn$_i$ is the weight average molecular weight of the component "i".

**Nominal viscosity molecular weight (Mv)** is calculated from the intrinsic viscosity [ $\eta$ ] according to ASTM D 4020 - 05

$$Mv = 5.37 \times 10^4 \times [\eta]^{1.37}$$

### Rheological polydispersity index

Rheological polydispersity index (rheological PI) was calculated as $10^5/G_c$ where $G_c$ stands for the cross-over modulus.

### Crossover Modulus G$_c$

The cross-over modulus is related to the rheological polydispersity index by the equation:

$$PI = 10^5/G_c$$

The cross over modulus $G_c$ is the value of G' (storage modulus) and G" (loss modulus) at the frequency where the two moduli are equal. That is where the curves or G'($\omega$) and G"($\omega$) cross. Fitting the points on both curves in the vicinity of the cross over point with cubic splines permits an objective identification of the cross over modulus.

### Rheology

Rheological parameters such as complex viscosity are determined by using a rheometer, preferably a Anton Paar Physica MCR 300 Rheometer on compression moulded samples under nitrogen atmosphere at 190°C using 25 mm diameter plates and plate and plate geometry with a 1.8 mm gap according to ASTM 1440-95. The oscillatory shear experiments were done within the linear viscosity range of strain at frequencies from 0.05 to 300 rad/s (ISO 6721-1). Five measurement points per decade were made. The method is described in detail in WO 00/22040.

The values of storage modulus (G'), loss modulus (G") complex modulus (G*) and complex viscosity ($\eta$*) were obtained as a function of frequency ($\omega$).

## Eta 747

The viscosity of the polymer at this shear stress is determined at a temperature of 190°C and has been found to be inversely proportional to the gravity flow of the polymer, i.e. the greater the viscosity the lower the gravity flow.

The determination is made by using a rheometer, preferably a Bohlin CS Melt Rheometer. Rheometers and their function have been described in "Encyclopedia of Polymer Science and Engineering", 2nd Ed., Vol. 14, pp. 492-509. The measurements are performed under a constant stress between two 25 mm diameter plates (constant rotation direction). The gap between the plates is 1.8 mm. An 1.8 mm thick polymer sample is inserted between the plates.

The sample is temperature conditioned during 2 min before the measurement is started. The measurement is performed at 190°C. After temperature conditioning the measurement starts by applying the predetermined stress.

The stress is maintained for 1800 s to let the system approach steady state conditions. After this time the measurement starts and the viscosity is calculated.

The measurement principle is to apply a certain torque to the plate axis via a precision motor. This torque is then translated into a shear stress in the sample. This shear stress is kept constant. The rotational speed produced by the shear stress is recorded and used for the calculation of the viscosity of the sample.

**Intrinsic viscosity** is measured according to DIN EN ISO 1628 (1998) in Decalin at 135 °C.

**Melting temperature $T_m$, crystallization temperature $T_c$,** is measured with Mettler TA820 differential scanning calorimetry (DSC) on 5-10 mg samples. Both crystallization and melting curves were obtained during 10 °C/min cooling and heating scans between 30 °C and 200 °C. Melting and crystallization temperatures were taken as the peaks of endotherms and exotherms.

Also the melt- and crystallization enthalpy **(Hm and Hc)** were measured by the DSC method according to ISO 11357-3.

## Quantification of comonomer content by FTIR spectroscopy

The comonomer content is determined by quantitative Fourier transform infrared spectroscopy (FTIR) after basic assignment calibrated via quantitative $^{13}$C nuclear magnetic resonance (NMR) spectroscopy in a manner well known in the art. Thin films are pressed to a thickness of between 100-500 $\mu$m and spectra recorded in transmission mode.

Specifically, the ethylene content of a polypropylene-co-ethylene copolymer is determined using the baseline corrected peak area of the quantitative bands found at 720-722 and 730-733 cm$^{-1}$. Specifically, the butene or hexene content of a polyethylene copolymer is determined using the baseline corrected peak area of the quantitative bands found at 1377-1379 cm$^{-1}$. Quantitative results are obtained based upon reference to the film thickness.

## nIS

Charpy impact strength was determined according to ISO 179:2000 on V-notched samples of 80x10x4 mm$^3$ at 0 °C (nIS, 0°C) and -30 °C (nIS -30°C). Samples were cut from plaques of 4 mm thickness prepared by compression molding according to ISO 293:2004 using the conditions defined in chapter 3.3 of ISO 1872-2:2007.

## Tensile Properties:

## Tensile modulus

As a measure for stiffness, the tensile modulus (E-modulus) of the compositions was measured at 23°C on compression moulded specimens according to ISO 527-2:1993. For samples prepared with the co-rotating twin screw extruder, the specimens were cut from plaques of 4 mm thickness prepared by compression molding according to ISO 1872-2: (type: 1B4 4mm), while those prepared with the kneader, the specimens were cut from plaques of 2 mm thickness (type: S2/5A 2mm). The modulus was measured at a speed of 1 mm/min.

## Stress at Yield:

Stress at yield (in MPa) was determined on the same samples according to ISO 527-2. The measurement was conducted at 23 °C temperature with an elongation rate of 50 mm/min.

**Stress and Strain at Break:**

Stress at break (in MPa) and Strain at break (in%) were determined on the same samples according to ISO 527-2. The measurement was conducted at 23 °C temperature with an elongation rate of 50 mm/min.

**White spots**

A pellet section was viewed under a microscope. The number of white spots was observed.

**Examples**

UHMW PE1 homopolymer was purchased from Jingchem Corporation. It has a narrow, quite well defined Mv of 1,150,000 g/mol by ASTM 4020-81 (denoted in material info from the supplier).
UHMW PE2 homopolymer was purchased from Jingchem Corporation. It has a narrow, quite well defined Mv of 880,000 g/mol by ASTM 4020-81 (denoted in material info from the supplier).
HE3490-LS-H is a commercial bimodal HDPE.

**Table 1: properties of UHMW-PE and HE3490-LS-H**

|  | Intr. viscosity | Tm | Tc | $MFR_{21}$ | density | Eta 747 (190°C) |
|---|---|---|---|---|---|---|
| UHMW-PE1 | 8.4 dl/g | 131 °C | 117 °C | 0.03 | 934 kg/m$^3$ | 428,820 kPas |
| UHMW-PE2 | 7.7 dl/g | 131 °C | 117 °C |  | 933 kg/m$^3$ | Not measured |
| HE3490-LSH |  | 130 °C | 117 °C | 9 | 959 kg/m$^3$ | 557,000 kPas |

**Example 1**

Various blends of the two starting materials were prepared using extrusion or a batch mixer (kneader). The batch mixing conditions employed were 230°C, 40 rpm for 8 mins. Conventional extrusion conditions using a co-rotating twin screw extruder were employed. Extrusion was carried out at 230 to 240°C and 120 rpm. Blends 1, 2 and 4 were extruded twice using the same conditions. Blends 3 and 6 to 8 are extruded only once.
For all blends, the impact strengths are up to ten times higher for the inventive blends.

# Table 2. Summary of Blend Properties (UHMW-PE1)

| | Reference | Blend 1 | Blend 2 | Blend 3 (1st extr) | Blend 4 (re-extr) | Blend 5 |
|---|---|---|---|---|---|---|
| processing | ZSK18, co-rotating | ZSK18, co-rotating | ZSK18, co-rotating TSE | ZSK18, co-rotating TSE | ZSK18, co-rotating TSE | Haake kneader |
| | TSE | TSE | | | | |
| UHMW-PE1 [wt%] | 0 | 10 | 20 | 40 | 40 | 40 |
| HE3490-LSH [wt%] | 100 | 90 | 80 | 60 | 60 | 60 |
| PI | 3.48 | 2.93 | 2.35 | 1.48 | 1.60 | -- |
| MFR21 [dg/min] | 11 | 4.4 | 2.1 | 1.5 | 0.61 | 0.44 |
| MFR5 | 0.2 | 0.1 | 0.05 | 0.1 | nm | nm |
| density [g/cm³] | 962 | 960 | 958 | 954 | 954 | 954 |
| Eta 747, 190°C [1000 Pas] | 548 | | | 3,672 | **4,314** | 14,011 |
| nIS, 0°C [kJ/m²] | 20 | 33 | 50 | 114 | **111** | 55 |
| Rel impact strength % | 100 | 164 | 248 | 567 | **551** | 266 |
| nIS, -30°C [kJ/m²] | | 17 | 37 | 80 | 77 | |
| Tens Mod (MPa) | 1136 | 1102 | 1050 | 970 | **1000** | 991 |
| rel Tens mod [%]* | 100 | 97 | 92 | 85 | **88** | 87 |
| rel strain @ break [%]* | 100 | 109 | 124 | 105 | **125** | 15 |
| Microscopy (WS) | | | | Some, see fig. 1 | Minimal, see fig. 2 | |

Nm not measurable

*Relative to the reference HE3490-LS-H

# i.e. Reference is 100% HE3490-LS-H

Table 3. Summary of Blend Properties (UHMW-PE2)

| | UHMWPE2 content (wt%) | HE3490-LS-H (wt%) | Extrusion ZSK18, co-rotating TSE | Tensile modulus (MPa) | Relative* tensile modulus | nIS, 0°C (kJ/m²) | Relative* impact strength |
|---|---|---|---|---|---|---|---|
| Ref | 0 | 100 | 1-pass | 1161 | 100% | 21.9 | 100% |
| Blend 6 | 10 | 90 | 1-pass | 1188 | 102% | 36.2 | 165% |
| Blend 7 | 20 | 80 | 1-pass | 1215 | 105% | 55.0 | 251% |
| Blend 8 | 40 | 60 | 1-pass | 1197 | 103% | 116.5 | 532% |

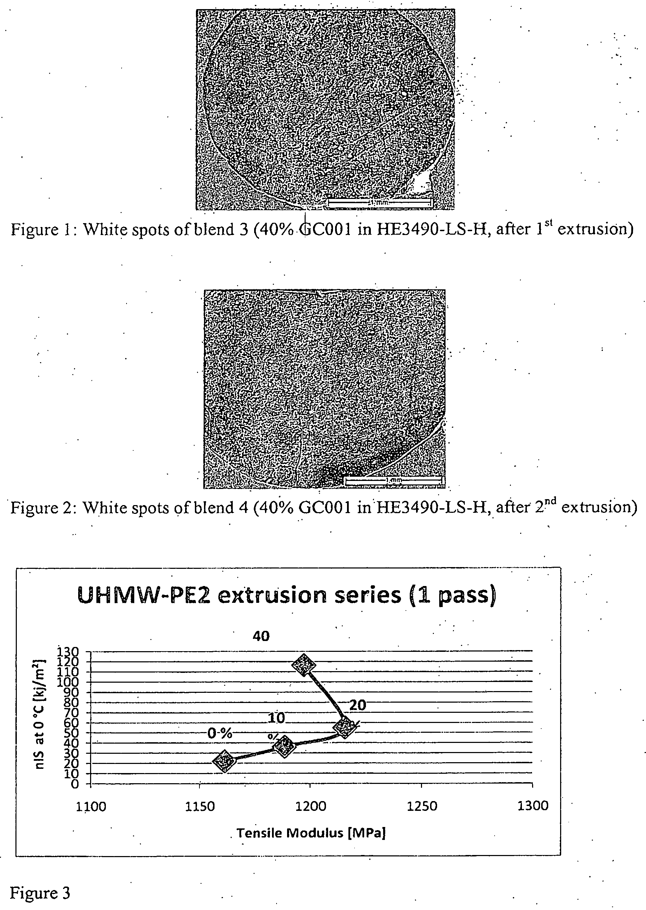

The "lower" Mv UHMWPE-2 was used in only 1-pass extrusion and the impact strength of the blends is again very high. Moreover, this is achieved without any loss in tensile modulus, i.e. the toughness of HE3490-LS-H is improved without even marginal loss in the stiffness. These results are summarised in figure 3.

## Claims

1. A pipe made from a high density polyethylene blend, comprising

   (A) 55 to 95 wt% of a high density multimodal polyethylene copolymer component having a density of at least 940 kg/m$^3$ measured according to ISO1183, said high density multimodal polyethylene copolymer comprising an ethylene homopolymer component and a hexene ethylene copolymer component;
   and
   (B) 5 to 45 wt% of an ultra-high molecular weight polyethylene homopolymer having an intrinsic viscosity of at least 6 dl/g measured according to DIN EN ISO 1628 (1998 ) in Decalin at 135°C and an $MFR_{21}$ of less than 0.5 g/10min (UHMW polyethylene) measured by ISO 1133 under 21.6 kg load at 190'C;
   and wherein said blend has an $MFR_{21}$ of 10.0 g/10min or less and a density of at least 940 kg/m$^3$.

2. A pipe made from a high density polyethylene blend comprising

   (A) 55 to 95 wt% of a high density multimodal polyethylene copolymer component having a density of at least 940 kg/m$^3$, said high density multimodal polyethylene copolymer comprising an ethylene homopolymer component and a hexene ethylene copolymer component; and
   (B) 5 to 45 wt% of an ultra-high molecular weight polyethylene homopolymer having a nominal viscosity molecular weight Mv of at least 800,000 and an $MFR_{21}$ of less than 0.5 g/10min (UHMW polyethylene);
   and wherein said blend has an $MFR_{21}$ of 10.0 g/10min or less and a density of at least 940 kg/m$^3$.

3. A pipe as defined in claim 1 or 2, wherein component (A) comprises a bimodal HDPE.

4. A pipe as defined in any preceding claim, wherein component (A) is a copolymer having 0.1 to 2 mol% comonomer (FTIR).

5. A pipe as defined in any preceding claim, wherein component (A) has an $MFR_{21}$ of 1-20 g/10min.

6. A pipe as defined in any preceding claim, wherein component (A) is present in an amount of 58 to 90 wt% and component (B) in an amount of 10 to 42 wt%.

7. A pipe as claimed in any preceding claim wherein the MFR$_5$ of the blend is less than 1.0 g/10min measured by ISO 1133 under 5.0 kg load at 190'C.

8. A pipe as claimed in any preceding claim wherein the density of the blend is 952 to 961 kg/m$^3$.

9. A pipe as claimed in any preceding claim wherein component (A) has an Mw/Mn of at least 10.

10. A pipe as claimed in any preceding claim wherein component (B) has an intrinsic viscosity of 7 dl/g or more.

11. A pipe as claimed in any preceding claim wherein component (B) has a density of 930 to 950 kg/m$^3$.

12. A pipe as defined in any preceding claim, wherein component (B) is prepared using a Ziegler-Natta catalyst.

13. A pipe as claimed in any preceding claim having an MFR$_{21}$ of 0.1 to 8 g/10min.


**Patentansprüche**

1. Rohr aus einer Mischung eines Polyethylens mit hoher Dichte, umfassend

    (A) 55 bis 95 Gew.-% eines multimodalen Polyethylencopolymerbestandteils mit hoher Dichte, der eine Dichte von mindestens 940 kg/m$^3$ hat, gemessen gemäß ISO 1183, wobei das multimodale Polyethylencopolymer mit hoher Dichte einen Ethylenhomopolymerbestandteil und einen Hexen-Ethylen-Copolymerbestandteil umfasst; und
    (B) 5 bis 45 Gew.-% eines Polyethylenhomopolymers mit ultrahohem Molekulargewicht, das eine intrinsische Viskosität von mindestens 6 dl/g, gemessen gemäß DIN EN ISO 1628 (1998) in Decalin bei 135 °C, und einen MFR$_{21}$ von weniger als 0,5 g/10 min (UHMW-Polyethylen) hat, gemessen gemäß ISO 1133 unter einer Last von 21,6 kg bei 190 °C;
    und wobei die Mischung einen MFR$_{21}$ von 10,0 g/10 min oder weniger und eine Dichte von mindestens 940 kg/m$^3$ hat.

2. Rohr aus einer Mischung eines Polyethylens mit hoher Dichte, umfassend

    (A) 55 bis 95 Gew.-% eines multimodalen Polyethylencopolymerbestandteils mit hoher Dichte, der eine Dichte von mindestens 940 kg/m$^3$ hat, wobei das multimodale Polyethylencopolymer mit hoher Dichte einen Ethylenhomopolymerbestandteil und einen Hexen-Ethylen-Copolymerbestandteil umfasst; und
    (B) 5 bis 45 Gew.-% eines Polyethylenhomopolymers mit ultrahohem Molekulargewicht, das ein Nennviskositätsmolekulargewicht Mv von mindestens 800.000 und einen MFR$_{21}$ von weniger als 0,5 g/10 min (UHMW-Polyethylen) hat;
    und wobei die Mischung einen MFR$_{21}$ von 10,0 g/10 min oder weniger und eine Dichte von mindestens 940 kg/ m$^3$ hat.

3. Rohr nach Anspruch 1 oder 2, wobei der Bestandteil (A) ein bimodales HDPE umfasst.

4. Rohr nach einem der vorhergehenden Ansprüche, wobei der Bestandteil (A) ein Copolymer ist, das 0,1 bis 2 Mol-% Comonomer umfasst (FTIR).

5. Rohr nach einem der vorhergehenden Ansprüche, wobei der Bestandteil (A) einen MFR$_{21}$ von 1-20 g/10 min hat.

6. Rohr nach einem der vorhergehenden Ansprüche, wobei der Bestandteil (A) mit einer Menge von 58 bis 90 Gew.-% und der Bestandteil (B) mit einer Menge von 10 bis 42 Gew.-% vorliegt.

7. Rohr nach einem der vorhergehenden Ansprüche, wobei der MFR$_5$ der Mischung weniger als 1,0 g/10 min ist, gemessen gemäß ISO 1133 unter einer Last von 5,0 kg bei 190 °C.

8. Rohr nach einem der vorhergehenden Ansprüche, wobei die Dichte der Mischung 952 bis 961 kg/m$^3$ ist.

9. Rohr nach einem der vorhergehenden Ansprüche, wobei der Bestandteil (A) ein Mw/Mn von mindestens 10 hat.

**10.** Rohr nach einem der vorhergehenden Ansprüche, wobei der Bestandteil (B) eine intrinsische Viskosität von 7 dl/g oder mehr hat.

**11.** Rohr nach einem der vorhergehenden Ansprüche, wobei der Bestandteil (B) eine Dichte von 930 bis 950 kg/m$^3$ hat.

**12.** Rohr nach einem der vorhergehenden Ansprüche, wobei der Bestandteil (B) unter Verwendung eines Ziegler-Natta-Katalysators hergestellt wird.

**13.** Rohr nach einem der vorhergehenden Ansprüche, das einen MFR$_{21}$ von 0,1 bis 8 g/10 min hat.

**Revendications**

**1.** Tuyau fabriqué à partir d'un mélange de polyéthylène de masse volumique élevée, comprenant

(A) 55 à 95 % en poids d'un composant copolymère de polyéthylène multimodal de masse volumique élevée présentant une masse volumique d'au moins 940 kg/m$^3$ mesurée selon ISO1183, ledit copolymère de polyéthylène multimodal de masse volumique élevée comprenant un composant homopolymère d'éthylène et un composant copolymère d'éthylène hexène ; et
(B) 5 à 45 % en poids d'un homopolymère de polyéthylène de masse moléculaire ultra-élevée présentant une viscosité intrinsèque d'au moins 6 dl/g mesurée selon DIN EN ISO 1628 (1998) dans la décaline à 135°C et un MFR$_{21}$ de moins de 0,5 g/10 min (polyéthylène UHMW) mesuré par ISO 1133 sous une charge de 21,6 kg à 190 °C ;
et dans lequel ledit mélange présente un MFR$_{21}$ de 10,0 g/10 min ou moins et une masse volumique d'au moins 940 kg/m$^3$.

**2.** Tuyau fabriqué à partir d'un mélange de polyéthylène de masse volumique élevée comprenant

(A) 55 à 95 % en poids d'un composant copolymère de polyéthylène multimodal de masse volumique élevée présentant une masse volumique d'au moins 940 kg/m$^3$, ledit copolymère de polyéthylène multimodal de masse volumique élevée comprenant un composant homopolymère d'éthylène et un composant copolymère d'éthylène hexène ; et
(B) 5 à 45 % en poids d'un homopolymère de polyéthylène de masse moléculaire ultra-élevée présentant une masse moléculaire à viscosité nominale Mv d'au moins 800 000 et un MFR$_{21}$ de moins de 0,5 g/10 min (polyéthylène UHMW) ;
et dans lequel ledit mélange présente un MFR$_{21}$ de 10,0 g/10 min ou moins et une masse volumique d'au moins 940 kg/m$^3$.

**3.** Tuyau selon la revendication 1 ou 2, dans lequel le composant (A) comprend un HDPE bimodal.

**4.** Tuyau selon une quelconque revendication précédente, dans lequel le composant (A) est un copolymère présentant un comonomère (FTIR) à 0,1 à 2 % en mole.

**5.** Tuyau selon une quelconque revendication précédente, dans lequel le composant (A) présente un MFR$_{21}$ de 1-20 g/10 min.

**6.** Tuyau selon une quelconque revendication précédente, dans lequel le composant (A) est présent en une quantité de 58 à 90 % en poids et le composant (B) en une quantité de 10 à 42 % en poids.

**7.** Tuyau selon une quelconque revendication précédente dans lequel le MFR$_5$ du mélange est inférieur à 1,0 g/10 min mesuré par ISO 1133 sous une charge de 5,0 kg à 190 °C.

**8.** Tuyau selon une quelconque revendication précédente dans lequel la masse volumique du mélange est de 952 à 961 kg/m$^3$.

**9.** Tuyau selon une quelconque revendication précédente dans lequel le composant (A) présente un Mw/Mn d'au moins 10.

**10.** Tuyau selon une quelconque revendication précédente dans lequel le composant (B) présente une viscosité intrinsèque de 7 dl/g ou plus.

**11.** Tuyau selon une quelconque revendication précédente dans lequel le composant (B) présente une masse volumique de 930 à 950 kg/m$^3$.

**12.** Tuyau selon une quelconque revendication précédente, dans lequel le composant (B) est préparé en utilisant un catalyseur de Ziegler-Natta.

**13.** Tuyau selon une quelconque revendication précédente présentant un MFR$_{21}$ de 0,1 à 8 g/10 min.

Figure 1: White spots of blend 3 (40% GC001 in HE3490-LS-H, after 1st extrusion)

Figure 2: White spots of blend 4 (40% GC001 in HE3490-LS-H, after 2nd extrusion)

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007042216 A
- WO 9618677 A
- WO 2006092378 A
- WO 9428064 A
- EP 517868 A
- WO 0022040 A

**Non-patent literature cited in the description**

- **OGUNNIYI et al.** *Journal of Applied Polymer Science,* 2005, vol. 97, 413-425
- **VADHAR et al.** *Journal of Applied Polymer Science,* 1986, vol. 32, 5575-5584
- **HUANG ; BROWN.** *Polymer,* 1992, vol. 33, 2989-2997
- Encyclopedia of Polymer Science and Engineering. vol. 14, 492-509